# EUROPEAN PATENT APPLICATION

(11) **EP 1 971 087 A1**
(43) Date of publication of application: **17.09.2008**
(21) Application number: 07005077.8
(22) Date of filing: 12.03.2007
(51) Int. Cl.: H04L 12/56

(54) **Method for controlling data traffic between gateways**

(71) Applicant: Nokia Siemens Networks GmbH & Co. KG, 81541 München (DE)
(72) Inventor: Popovic-Berrsche, Branko, 82256 Fürstenfeldbruck (DE); Seitter, Norbert, 82008 Unterhaching (DE)

(57) **Abstract**

A method for controlling data traffic between a first and a second packet transceiving gateway, the data traffic being generated by a number of established connections between a plurality of devices connected to respectively one of said gateways, has the steps of monitoring quality of the data traffic of said connections, rejecting, if said quality falls below a predetermined level, in one of said gateways new connections requested towards said other gateway, and resuming acceptance of such connections with reference to the number of connections.

## Description

The invention relates to a method for controlling data traffic between gateways, to a gateway controller and to a gateway according to the preamble of the independent claims. Particularly, the invention relates to controlling data traffic between packet transceiving (transmitting and receiving) gateways which are connected on their core side to a packet routing network such as the internet under IPv4 or IPv6, for example. The packets may preferably be data packets requiring real time routing, such as data packets from voice over IP (VoIP) or similar services (video conferencing, internet TV, ...).

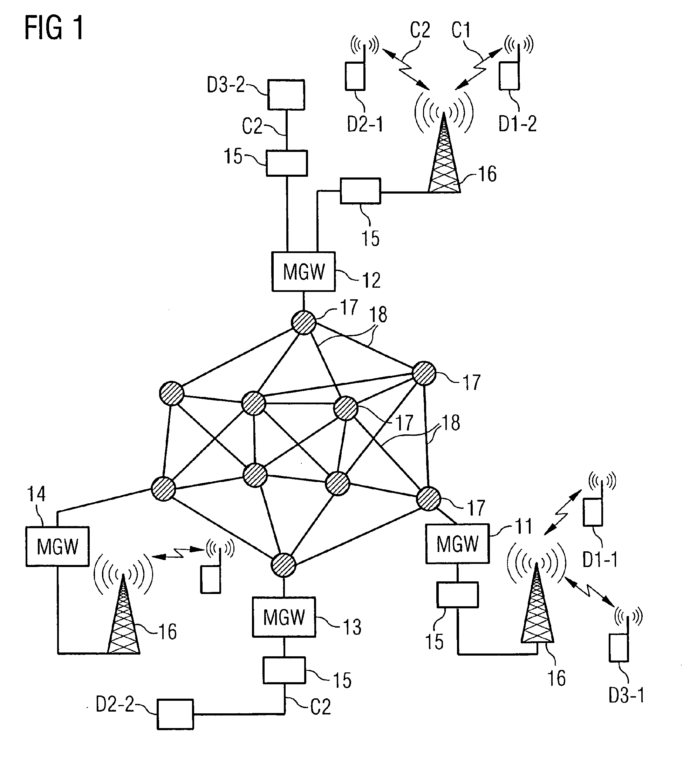

The structure in which the invention may be applied is schematically shown in Fig.1. 17 symbolizes plural routers for routing packets according to the address given in their respective header. The routers 17 are interconnected by lines 18 for rendering connectivity as required. Packet routing from a source to a destination may be made through one of a plurality of possible routings, to be decided ad hoc by the individual routers involved. The routers are geographically distributed. To some or many of them gateways 11 - 14 may be connected. They may be media gateways (MGWs) for organizing packet transmission between the core network formed by the routers 17 and their interconnections 18 and the various subscribers connected to the access side of the gateways. Such customers may be or comprise packet transceiving (transmitting and receiving) equipment such as internet telephone equipment. The equipment may also be wireless equipment such as cell phones, portable laptops, PDAs or the like. The equipment may itself be packet transceiving, or it may use some kind of multiplexing (TDM) or asynchroneous transfer mode (ATM). The gateways 11 - 14 organize data flow to and from said various customers and to and from the core network.

The gateways are geographically distributed. As an example, it is assumed that gateway 11 is located in Munich, gateway 12 is located in Hamburg, gateway 13 is located in Stuttgart and gateway 14 is located in Paris. Each of these gateways may have plural connections to every other gateway. For example, gateway 11 (assumed to be located in Munich) may host at the same time 58 connections to the gateway 12 in Hamburg, 23 connections to gateway 14 in Paris, and 57 connections to gateway 13 in Stuttgart. It is to be noted that such connections are logical connections in that they do not correspond to fixedly reserved lines or time slots of frequencies. In the core network, at least, the connections are maintained by packet routing according to usual internet technology. In the case of real time traffic (for example for VoIP) these packets must be prioritized such that they reach the destination in due time to be correctly assembled there. Nevertheless, each gateway knows how many connections it hosts to every other gateway.

It may now be that problems in the core network occur. For example, one of the routers 17 may encounter a failure, a connection 18 between routers may be interrupted, or the like. Such a failure does not necessarily affect connections between all gateways. Two particular gateways may be more affected than another combination of two gateways. To some extent, the question of how strong a gateway is affected by problems in the core network depends on how near or far away from source and destination such a failure occurs. If a failure in the core network is far away from both the source and destination gateway, the effect of said failure on the connections between said two gateways may be limited because routing may be made around the core network portion having the failure. Vice versa, if the failure occurs close to source or destination gateway, the effect of this failure may be strong for that one gateway and its connections to one particular other gateway, but may have little effect on connections hosted by all other gateways.

Generally speaking, problems in the core network have different effects on different gateways or different gateway pairs hosting connections amongst devices.

Connection problems in the core network are for example recognizable as packet loss rate (i.e. packets sent out from resource not reaching the destination), jitter (packets not received in due time) or the like. A gateway may become aware of that problems through messages sent from a router 17 to the gateway (such as an "explicit congestion notification" - ECN). Further, gateways may support the real time control protocol (RTCP) made for negotiating and observing quality of service (QoS) parameters by periodically exchanging messages between sender and receiver. The reaction of the gateway may be that the gateway temporarily refuses accepting new connections until the problem has resolved or diminished.

The disadvantages of the present approach are the following:
- RTCP requires a part of the available bandwidth. This bandwidth is lost for payload data transmission.
- The reaction of a gateway on occurring problems is less specific than it could be.
- Resuming acceptance of new connections may immediately lead to the same problem as encountered before. The system is thus unstable.

It is the object of the invention to provide a method for controlling data traffic, a gateway controller and a gateway allowing a resource saving, autonomous detection of network problems and a specific reaction in case problems are detected.

This object is accomplished in accordance with the features of the independent claims. Dependent claims are directed on preferred embodiments of the invention.

According to one aspect of the invention a method for controlling data traffic between a first and a second packet transceiving gateway has the steps of monitoring the quality of the data traffic of connections between said two gateways and if the quality falls below a defined value, rejecting in one of said gateways new connections requested towards the respective other gateway. Again accepting such requested connections is not resumed until the number of connections has decreased in a certain manner. Here, both the quality monitoring and the connection rejection is particular for a pair of gateways. For example, quality of data transmission between the Munich gateway 11 and the Hamburg gateway 12 is determined, and if this quality is found unsatisfactory, connections requested from the Munich gateway to the Hamburg gateway are rejected, whereas other requested connections towards other gateways both from the Munich gateway and the Hamburg gateway are allowed.

A further aspect of the invention that may be considered for it alone or in combination with the above mentioned aspect is that data traffic quality is evaluated in the gateway alone without relying on data exchange with other gateways or packet routers, particularly by monitoring incoming data traffic. This monitoring may be specific for other gateways (i.e. for all connections between the Munich and the Hamburg gateway a common quality measure is established, another one is established for the Munich-Stuttgart-connection, and the like, respectively by monitoring quality of the incoming data traffic from these respective gateways). This has the advantage that core network resources are no longer required for communicating quality issues amongst gateways, and one gateway does not require a counterpart gateway to support specific protocols or measures.

In the following, embodiments of the invention will be described with reference to the drawings in which
- Fig. 1: is a topology of a network in which the invention may be applied,
- Fig. 2: is a gateway according to the invention,
- Fig. 3: shows characteristics of the problem handling according to the invention.

In this specification, same reference numerals mean same components.

In Fig.1, reference No. 17 denotes network routers, 18 connections ("backbones") amongst them. Routers 17 and connections 18 form the core network. 11 - 14 are gateways, particularly media gateways (MGWs) connected respectively to at least one router 17. The gateways are on their access side respectively also connected to further communication technology which finally render connectivity for users and devices, denoted by capital letter D. Such devices may be mobile or stationary devices. Particularly, they generate and receive real time data traffic, such as VoIP data traffic. However, the devices D may be of comparatively conventional nature, for example employing TDM, and packet data traffic is made only in the core network. Fig. 1 shows as an example some particular connections C1, C2 and C3. Connections C1 and C3 are hosted/managed by gateways 11 (assumed for Munich) and gateway 12 (assumed for Hamburg) whereas connection C2 is assumed between the Hamburg gateway 12 and the Stuttgart gateway 13. These connections extend between particular devices, for example connection C1 between device D1-1 and device D1-2, connection C3 between device D3-1 and device D3-2, and connection C2 between device D2-1 and device D2-2. These connections are logical connections in the sense that at least in the core network no dedicated connection corresponds to said logical connection. Rather, connectivity is rendered at least in the core network and to and from the involved gateways through packet routing, appropriately prioritized particularly for real time traffic. On the access side of the gateway, dedicated channels may at least in parts be provided.

For the connections, each gateway is aware of the connection as a logical item, and knows the corresponding counterpart gateway. For example for connection C1 going through gateway 11, said gateway 11 knows that C1 reaches through gateway 12. Likewise, the packets of the data traffic may make the respectively corresponding gateway recognizable.

Each gateway monitors data traffic in a groupwise manner, i.e. such that data traffic exchanged with a particular other gateway is monitored. If the result is found not meeting predefined criteria, measures particularly for data traffic between said two gateways for which data traffic quality was measured are taken.

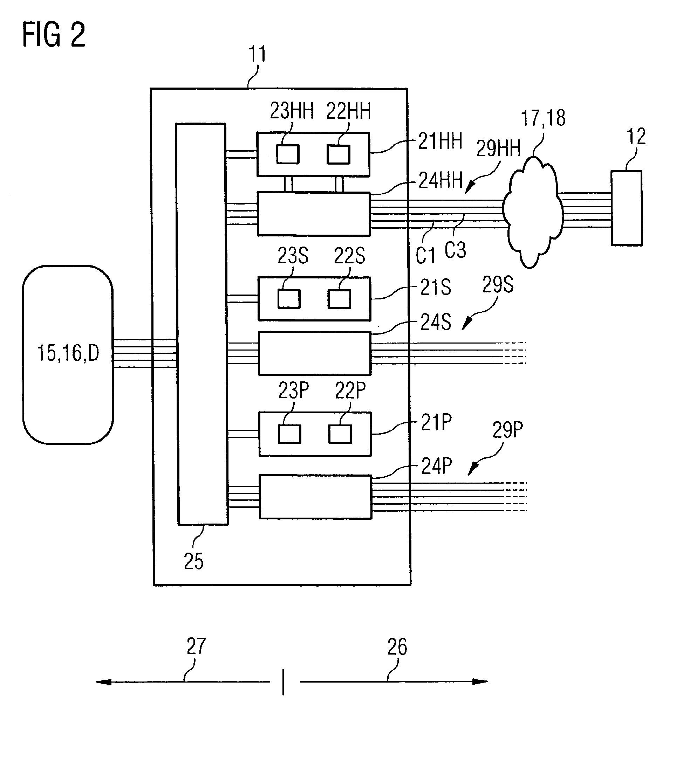

Fig. 2 shows schematically the set-up of a gateway 11. 26 is the core side of the gateway (i.e. connected to the core network), 27 is the access side (connected finally to users and devices). It is pointed out that the representation is only schematically/logical. The physical hardware may be different from what is shown in Fig. 2. 25 is generally a means for sending and receiving data packets in both directions, i.e. from and towards the access side and from and towards the core side. It performs managing activities as required, such as routing, conversion and the like. Bundles 29 symbolize connections to various other gateways. These connections are of logical nature. The depicted lines do not correspond to physically existing lines. Rather, these connections may physically be rendered by one single line carrying the data traffic of all shown connections. 29 HH symbolize all the connections towards gateway 12 (assumed to be in Hamburg), 29S symbolizes all connections to gateway 13 (assumed in Stuttgart) and 29P symbolizes all connections towards gateway 14 (assumed to be in Paris). The sending and receiving means 25 distributes data of said connections to and from the respectively connected equipment on the access side.

24 symbolizes connection managing means. They are depicted separate for the various connections to the various separated gateways at separate locations. However, no such separation needs physically be existing. It is a logical separation made in accordance with the counterpart gateway of the respectively managed connection. The managing means may allow or reject connection requests and may monitor the number of connections towards the respective other gateway. Therefore, the gateway 11 may separately keep track of the number of connections to each other gateway. The gateway 11 further comprises gateway controllers 21, here again shown logically divided in correspondence to the respective different counterpart gateways at other locations (gateway controller 21HH, 21S, 21P). Such a gateway controller 21 comprises monitoring means 22 for monitoring quality of the data traffic of connections between the controlled (own) gateway and one particular counterpart gateway. For example, monitoring means 22HH may monitor quality of data traffic of all connections to gateway 12 assumed to be in Hamburg. For all said connections to one particular other gateway, a common quality measure is established. Preferably, this is done by monitoring the incoming data traffic from said particular counterpart gateway (i.e. the incoming data traffic from gateway 12) and determining a quantity such as packet loss rate and/or jitter and/or others. If the quality of data traffic of the connections, judged with reference to the above described quality measure, is found unsatisfactory (for example being lower than a reject level or reject threshold), then rejection control means 23 are caused to reject new connections requested to be established towards the particular other gateway. The rejection control means 23 again act particular for connection requests towards particular gateways. They are depicted in Fig. 2 separately. But again, this separation may be of logical nature. Physically, there needs not to be such a separation.

For example, if data traffic coming in from the Hamburg gateway 12 is found unsatisfactory, then monitoring means 22H will realize this and will cause rejection control means to reject the establishment of a new connection requested towards the gateway 12 in Hamburg. For a user on the access side, this has the consequence that the connection requested by him can not be made in the desired manner. It may have the same effect as "line busy". Since through this measure no new connections are established, the number of connections towards the counterpart gateway will decrease sooner or later since already existing connections will sooner or later be terminated. This has the consequence of lower data traffic sent towards the counterpart gateway so that data load between said two gateways will be reduces, thus putting less burden on the problematic structure in the core network, and thus increasing quality of the already established/remaining connections. Again accepting connections towards said counterpart gateway is not resumed before the number of connections has not decreased in a certain manner.

Generally speaking, according to the invention, deciding commencement of rejecting in one gateway newly requested connections towards a particular counterpart gateway may be made under qualitatively different criteria (such as traffic quality) or set of criteria than deciding to resume acceptance of such connections (with reference to number of connections, possibly in combination with quality). Through appropriately selecting the qualitative and quantitative criteria it can be ensured that countermeasures to problems are well suited to said problems. Monitoring the number of connection as a resume criterion has the effect that payload in the critical network part reduces prior to new connections being allowed so that the problematic network part is substantially disburdened prior to "business as usual" being resumed.

It should, however, be noted, that, looking at the topology in Fig. 1, the refusal of connections in one gateway towards a particular other gateway will not have immediately predictable effect on a particular dedicated connecting line 18 or backbone or router 17 because routing between two particular gateways is not made through fixed routing paths. The effect of refusing new connections is to some extent statistical. But nevertheless, it is measurable because those connections that statistically encountered problems are preserved by avoiding additional "competing" data traffic.

When accepting new connections is resumed, the traffic controlling method may start from beginning on. This means that the gateway may return to "business as usual", i. e. accepting connections under the usual criteria, monitoring data traffic quality as mentioned and taking the mentioned countermeasures if problems are detected.

The term "gateway" as used in this specification may be understood to mean a media gateway or a multimedia gateway provided separately from controlling components such as a control server, for example a mobile switching center MSC. However, the term "gateway" may also mean a unit having the above gateway and control functions incorporated into one device.

Quality of data traffic in relation to a particular other gateway can be established through one or more of the following options:
- Employing mutual information of the gateways about what they received from the respective other gateway. This may be done under a certain protocol, such as RTCP. This has the disadvantage that both gateways must support this procedure. Further, for administrative communication amongst the gateways bandwidth will be consumed that is no longer available for payload.
- Monitoring on the side of one gateway quality of the incoming data traffic from one particular other gateway. For example, in the gateway 11 (assumed to be in Munich) the data loss rate and/or jitter of packets coming from gateway 12 (assumed to be in Hamburg) can be determined by monitoring and evaluating the incoming data packets. This has the advantage that a gateway does not require a cooperating counterpart gateway and that no bandwidth in the core network is required for the administrative signalling amongst the gateways. Monitoring may be made with reference to all connections or by monitoring only a selection thereof (such as every 2^{nd}, 3^{rd}, 4^{th}, generally n^{th} connection) .

If quality of data traffic between two particular gateways falls below a predetermined level, newly requested connections between said two gateways are rejected by at least one of said two gateways. Particularly, if monitoring the quality is made in one of the two gateways, this one gateway will reject newly requested connections to the respective other gateway.

Resuming acceptance of requested connection towards said other gateway can be made under one ore more of the following criteria:
- The number of connections towards the other gateway has fallen below a target number. The target number may be a relative number, particularly in relation to the number of connections at the time when the low quality has been determined, as described above. For example, if at the time when low quality was detected, there were 85 connection hosted between the Munich server 11 and the Hamburg server 12, then a target number of say 80% of the earlier number can be set as a new target number, i.e. 68 connections. When the rejections of newly requested connections has started, it may for example periodically be checked how many connections to the particular other server exist. As long as the number of connections is higher than the set target number, no newly requested connections will be accepted and built.
- Monitoring the quality of data traffic. Also after beginning the refusal of newly requested connections the data quality can be monitored, for example periodically or under certain criteria, for the already existing connections towards the other gateway. Rejecting requested connections may be continued as long as quality remains below a certain resume level. This resume level may be the same as that leading to the commencement of connection refusal. But likewise, there may some kind of hystheresis be implemented so that the threshold for resuming acceptance is higher than the threshold for starting refusal.
- Preferably, the two above mentioned criteria may be combined. The criteria may be AND-combined or OR-combined. Preferably, the two conditions are AND-connected such that accepting newly requested connections is only made when the number of connections has fallen below the target number and quality of data traffic is found satisfactory again. Data quality check may be made after the number of connections has been found to meet the given criterion.
- The two above criteria may further be combined as follows: If after starting rejecting requested connections, the number of connections towards a particular other gateway has fallen below the target number and quality of data traffic is still found unsatisfactory, the target number may again be reduced, preferably to a relative value, such as 80% of the earlier value. In the above example, the earlier value was 68 connections. 80% thereof are 54 connections (rounded), which will be taken as new target number of the number of connections hosted by said two particular gateways. It is then again periodically checked whether the new target number has reached. When it has been reached, quality of data traffic is determined. Then the procedure may be repeated: if quality is still unsatisfactory, the target number is again reduced, and so on. Vice versa, if, after the number of connections has fallen below a target number and then quality of data traffic is found satisfactory (being above a resume level threshold), accepting requested connections may be resumed.

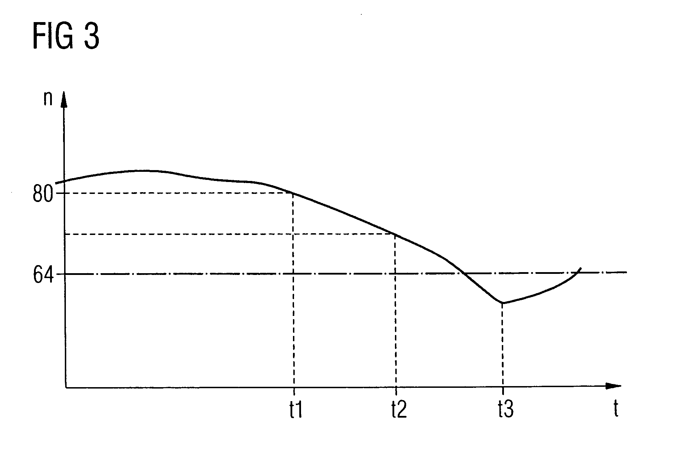

Fig. 3 shows the above combination schematically: the abscissa shows passing time, the ordinate is the number of connections towards a particular other gateway. It is assumed that at time t1 unsatisfactory data traffic quality is found. It is further assumed that at that point of time the number of connections between the two concerned gateways was 80. Accordingly, since at t1 data traffic quality was found unsatisfactory, the target number for the number of connections is reduced to e.g. 80% of the earlier value, i.e. 64 connections. Then periodically (t2, t3) it is checked whether the target number has been reached. This is not the case at t2, but at t3 the number of connections is below the target number. Then, data traffic quality is monitored. If it is found satisfactory, accepting newly requested connections towards the other gateway is resumed, so that most likely the number of connections will again increase.

If, at time t3, data traffic quality would still be unsatisfactory, the target number might again be decreased, for example again to 80% of the earlier value, i.e. 51 connection (rounded). Then, again the numbers of connections may periodically be monitored. Once they have fallen below the target number, quality is checked, and if found satisfactory, accepting newly requested connections is resumed.

The period of monitoring the number of connections while rejecting requested connections may have a lower limit of 0,5s or 1s or 2s. The upper limit may be 20s or 10s.

The various components shown in Fig.2 may be all built into one gateway. Particularly, data traffic monitoring components may be built into the gateway itself. But these resources may also refer to external information, particularly statistical data on data traffic quality. Further, components such as data quality monitoring may also be externally provided.

According to the invention, new connections are only rejected for those gateway pairs between which data traffic quality is found unsatisfactory. This means that the system response on decreased data traffic quality is precisely focussed on the network part that encounters difficulties. Those network parts not encountering difficulties are not affected by the countermeasure to be taken against unsatisfactory data traffic quality.

In evaluating data traffic quality, all connections between two particular gateways may be evaluated. Likewise, a representative selection thereof (such as every n-th connection) may be monitored, under the assumption that they would as well reflect a problem occurring between said two gateways.

After unsatisfactory data traffic quality has been found, the number of connection may be reduced to a new relative target number. The relative value may be between 95% and 50% of the earlier value, preferably between 90% and 75%. The further reduction, as mentioned above, may have the same relative quantity with respect to the earlier target number.

In a preferred embodiment, once a gateway has started rejecting requested connections towards a particular counterpart gateway, or has resumed accepting such connections, said gateway may notify the counterpart gateway accordingly, in response to which the counterpart gateway takes the same measures (starting rejecting or resuming acceptance of requested connections). This makes system response faster and avoids the possible effect that the traffic reducing approach by the one gateway (by rejecting requested connections) is outlifted by an increased number of newly established connections accepted from the counterpart gateway towards the one gateway. This, however, requires corresponding capabilities on the side of the counterpart gateway.

## Claims

1. A method for controlling data traffic between a first and a second packet transceiving gateway, the data traffic being generated by a number of established connections between a plurality of devices connected to respectively one of said gateways,
characterize by the steps of
monitoring quality of the data traffic of said connections between said two gateways,
if said quality falls below a predetermined level, rejecting in one of said gateway new connections requested towards said other gateways, and
resuming acceptance of such connections with reference to the number of connections towards said other gateway.

2. The method of claim 1, wherein quality monitoring is performed in the possibly rejecting gateway by evaluating the incoming data traffic.

3. The method of claim 1 or 2, wherein requested connections are rejected until the number of connections between said gateways has dropped below a target number.

4. The method of claim 3, wherein the target number is a relative number in relation to an earlier number of connections, particularly in relation to the number of connections at the time when the quality has fallen below said predetermined level.

5. The method of claim 4, wherein when the number of connections has fallen below said target number and then quality of the remaining data traffic is still not found satisfactory, the target number is reduced, preferably by a relative amount, and rejecting requested connections is continued until the number of connections between said gateways has dropped below said reduced target number.

6. The method according to one of the preceding claims, wherein requested connections are rejected until quality of the remaining data traffic is found satisfactory.

7. The method according to one of the preceding claims, wherein the data traffic includes real time data traffic, particularly VoIP data traffic.

8. The method according to one of the preceding claims, wherein when one gateway has started rejecting connections towards a counterpart gateway, or has resumed accepting such connections, it notifies the counterpart gateway accordingly, and the counterpart gateway takes corresponding measures towards the one gateway.

9. A gateway controller (21HH, 21S, 21P) for or in a gateway (11) exchanging data packets with another gateway (12), the data packets being generated by a number of established connection (C1, C3) between a plurality of devices (D) connected to either of the controlled gateway (11) or the other gateway (12),
characterize by
monitoring means (22H) for monitoring quality of the data traffic of connections extending between the controlled gateway (11) and one particular other gateway (12), and
rejection control means (23H) for causing rejection of new connections requested towards said other gateways if said quality falls below a predetermined level and resuming acceptance of such connections with reference to the number of connections towards said other gateway.

10. The controller of claim 9, wherein the controller monitors quality of the incoming data traffic from the other gateway.

11. The controller according to claim 9 or 10, comprising means for implementing the method according to one of the preceding method claims.

12. A gateway (11) comprising
means (25) for sending and receiving data packets to and from one or more other gateways (12 - 14), the data packets being generated by a number of established connections (C1 - C3) through said gateways between a plurality of devices (D) connected to respectively one of said gateways,
connection managing means (24HH, 24S, 24P) allowing or rejecting connection requests and monitoring the number of connections individually for every connected gateway, and
a gateway controller according to claim 21 or 22, wherein the rejection control means may cause the connection managing means to reject call requests towards the gateway to which the connections were monitored.

13. A gateway, particularly according to claim 12, for implementing the method according to one of the preceding method claims.
